# EUROPÄISCHE PATENTSCHRIFT

(11) **EP 1 412 995 B1**
(45) Veröffentlichungstag und Bekanntmachung des Hinweises auf die Patenterteilung: **06.07.2005**
(21) Anmeldenummer: 01921006.1
(22) Anmeldetag: 04.04.2001
(51) Int. Cl.: H01M 4/74, H01M 4/80, H01G 9/04

(54) **MEHRSCHICHTIGE ELEKTRODE**
MULTILAYER ELECTRODE
ELECTRODE MULTICOUCHE

(30) Priorität: 10.05.2000 AT 8162000
(43) Veröffentlichungstag der Anmeldung: 28.04.2004
(73) Patentinhaber: Funktionswerkstoffe Forschungs- U. Entwicklungs Gmbh., 7000 Eisenstadt (AT)
(72) Erfinder: MALY-SCHREIBER, Martha, A-2340 Mödling (AT); WHITEHEAD, Adam, Harding, 7000 Eisenstadt (AT)
(74) Vertreter: Pinter, Rudolf, Dipl.-Ing.
(86) Internationale Anmeldenummer: PCT/AT2001/000097
(87) Internationale Veröffentlichungsnummer: WO 2001/086742

(56) Entgegenhaltungen:
- EP-A- 0 717 457
- EP-A- 1 061 596
- US-A- 5 300 165
- PATENT ABSTRACTS OF JAPAN vol. 1999, no. 09, 30. Juli 1999 (1999-07-30) & JP 11 121015 A (HOKURIKU ESUTEAARU KYODO KUMIAI), 30. April 1999 (1999-04-30)

## Beschreibung

Die Erfindung betrifft eine mehrschichtige, im wesentlichen flächige Elektrode einer elektrochemischen Anordnung, insbesonders einer Batterie oder eines Kondensators, bestehend zumindest aus einer elektrisch gut leitenden Leitschicht und einer damit elektrisch leitend verbundenen, eine Gitterstruktur aufweisenden Speicherschicht aus gewebten bzw. gewirkten, elektrisch leitfähig gemachten Fäden, vorzugsweise Kunststoffäden, in welcher elektroaktives Material samt allfälliger Zusatzstoffe eingelagert ist.

Im allgemeinen bestehen elektrochemische Anordnungen der hier interessierenden Art, wie etwa alkalische Zn-Braunstein-Batterien, Lithium-Ionen-Batterien, Lithium-Batterien, Lithium-Polymer-Batterien, Nickel-Metallhydrid-Batterien, wäßrige oder nichtwäßnge Superkondensatoren und dergleichen, unter anderem aus einer oder mehreren Elektroden, welche ihrerseits als Verbund von elektroaktivem Material und gegebenenfalls diversen Zusatzstoffen, mit einem Stromableiter aufgebaut sind. Der elektrische Leiter in diesem Verbund ist zumeist ein dreidimensionales Metallgitter, eine geätzte oder perforierte Folie, ein Streckmetall oder dergleichen. Beispiele dafür sind etwa der US 5,750,289 A, der EP 0 764 489 A oder der DE 40 19 092 A zu entnehmen.

Die verwendeten elektroaktiven Materialien liegen zumeist in Pulverform vor und können Ein- und Auslagerungsreaktionen, Oberflächenabsorptions- und -desorptionsreaktionen oder Verdrängungsreaktionen eingehen, wobei in bekannter Weise die entsprechenden elektrochemischen Prozesse ablaufen. Elektroaktive Pulvermaterialien für derartige Zwecke sind beispielsweise aus Vincent, C.A. and B. Scrosati, Modern Batteries. 2nd ed. 1997, London: Amold, sowie Linden, D., Handbook of Batteries. 2 ed. 1995, New York: MacGraw-Hill, oder auch Winter, M., et al., Insertion Electrode Materials for Rechargeable Lithium Batteries. Adv. Mater., 1998. 10(10):p. 725 - 763, bekannt.

Die Aufgabe der elektrisch leitenden Fäden bzw. des Stromableiters allgemein ist es, eine elektrische Verbindung mit möglichst geringem Widerstand für die Elektronen zwischen dem aktiven Elektrodenmaterial und einem externen Stromkreis bzw. einer verbundenen weiteren Elektrode derselben Anordnung zu bieten. Die Verbindung zu den stromableitenden Strukturen innerhalb der Elektrode von außen wird zumeist über eine Anschlußkante oder eine entsprechende Kontaktstelle mit gutem elektrischem Kontakt hergestellt. Im Inneren der Elektrodenstruktur besteht zumeist das Problem, daß das oben angesprochene elektroaktive Material in den meisten Fällen selbst ein schlechter Elektronenleiter ist. Darüber hinaus haben die elektroaktiven Teilchen des elektroaktiven Materials zumeist auch nur Punktkontakte zu anderen benachbarten Teilchen, was insgesamt zumeist dazu führt, daß zur Verbesserung der Ableitfähigkeit der in der Elektrode wandernden Elektronen Leitfähigkeitsadditive zugesetzt werden müssen, welche aber natürlich auch zu Masse und Volumen beitragen und damit die gravimetrischen und volumetrischen Energiedichten des Systems vermindern. Darüber hinaus können Volumenänderungen der elektroaktiven Materialien während des Ladens bzw. Entladens bewirken, daß elektroaktives Material vom sonstigen Elektrodenmaterial mechanisch abgetrennt wird, was beispielsweise bei Batterien zu einem graduellen Verlust an Ladungskapazität bei jedem Ladungszyklus führt.

Die Masse der Stromableitungsstruktur stellt üblicherweise einen beträchtlichen Teil der gesamten Masse beispielsweise einer Batterie oder eines Akkus dar, und beeinflußt deshalb die gravimetrische Energiedichte der Gesamtanordnung erheblich. Selbsttragende metallische Stromableiter, wie beispielsweise aus der eingangs bereits angesprochenen EP 0 764 489 A in Form poröser, gesinterter Metallkörper bekannt, weisen eine relativ hohe Dichte auf und sind kostenintensiv und unflexibel, wobei zufolge der hohen Eigendichte auch entsprechend wenig Platz für elektroaktives Material bleibt, was die Energiedichte des Systems ungünstig verringert. Eine Alternative dazu stellt die Verwendung eines leichtgewichtigen, flexiblen, nicht-leitenden Substratmaterials dar, auf dem eine dünne, durchgehende elektronenleitende Schichte aufgebracht ist. Derartige Anordnungen sind beispielsweise aus der eingangs ebenfalls bereits angesprochenen DE 40 19 092 A oder auch der EP-A-0 717 457 in Form von mehrschlchtigen, dreidimensionalen Kompositeleldrodengerüsten bekannt, was zwar mehr Platz für einzulagerndes elektroaktives Material bietet, aber auch die Stabilität der Elektroden verringert. In beiden Fällen besteht bei den bekannten Anordnungen aber darüber hinaus auch noch immer das angesprochene Problem mit der geringen Eigenleitfähigkeit des elektroaktiven Materials in der dreidimensionalen Ableitstruktur des Elektrodenverbundes.

Aufgabe der vorliegenden Erfindung ist es, Elektroden der eingangs genannten bekannten Art so zu verbessern, daß die erwähnten Nachteile vermieden werden, und daß insbesonders bei stabiler aber flexibler Struktur eine Verbesserung der Energiedichte mit einfachen-Mitteln möglich wird.

Gemäß der vorliegenden Erfindung ist zur Lösung dieser Aufgabe bei einer Elektrodenanordnung der eingangs genannten Art vorgesehen, dass die lokale Geometrie der Gitterstruktur der Speicherschicht auf die Größe und elektrische Leitfähigkeit der Partikel des eingelagerten elektroaktiven Materials und die im Betrieb der Anordnung jeweils vorliegende Stromdichte so abgestimmt ist, dass bei schlechter Leitfähigkeit der Partikel und/oder hoher lokaler Stromdichte im wesentlichen jedes einzelne der Partikel direkten Kontakt zu den Gitterfäden hat, wogegen bei guter Leitfähigkeit der Partikel und/oder niederer lokaler Stromdichte auch Partikel ohne eigenen direkten Kontakt mit den Gitterfäden in einer Gittertasche Platz finden, wozu die Gittertaschen mit zunehmender Entfernung von der Leitschicht und/oder einem Außenanschluss der Leitschicht größeres Volumen aufweisen. Die Erfindung geht dabei von der Überlegung aus, dass eine räumlich hohe Konzentration von Ableitfäden in der Gitterstruktur der Speicherschicht, die zwar die Stabilität der Struktur erhöht aber die volumetrische und gravimetrische Energiedichte der Elektrode negativ beeinflußt, nur dort vorteilhaft ist, wo entweder schlechte Leitfähigkeit der elektroaktiven Partikel selbst und/oder hohe lokale Stromdichte vorliegt. Ersteres ist durch das verwendete elektroaktive Material bestimmt; letzteres grundsätzlich durch die Entfernung des jeweiligen Gitterbereiches vom Ableitanschluß nach außen (in räumlicher Nähe zum eigentlichen Ableitanschluß nach außen treten naturgemäß höhere Stromdichten auf als in weiter von diesem Ableitanschluß entfernten Bereichen).

Die Abstimmung der lokalen Geometrie des Gitters aus gewebten Kunststoffäden kann sehr einfach durch Änderung der Parameter der Web- bzw. Wirktechnik erfolgen, wobei es grundsätzlich gleichgültig ist, ob die Gitterstruktur zuerst aus Kunststoffäden gewebt bzw. gewirkt und dann insgesamt auf geeignete Weise leitfähig gemacht wird oder ob das Weben oder Wirken bereits mit vorher leitfähigen Kunststoffäden erfolgt. Hier ist auch darauf hinzuweisen, daß die Herstellung der flächigen Gitterstruktur durch Weben (aus zumindest zwei (Kette und Schuß) oder auch mehreren Fäden) oder durch Wirken (stricken, häkeln, klöpeln - aus einem Faden) für die Zwecke der vorliegenden Erfindung gleichwertig ist. Auch wo im folgenden teilweise nur von Weben gesprochen wird, sind alle anderen geeigneten Verfahren zur Herstellung solcher Gitterstrukturen umfaßt. Abgesehen von den bevorzugten Kunststoffäden könnten aber auch andere geeignete natürliche oder künstliche Materialien zum Einsatz bei diesen Herstellverfahren kommen.

Die Speicherschicht der Elektrode nach der Erfindung wird also im Normalfall eine Gitterstruktur aufweisen, die horizontal und/oder vertikal nicht durchgehend gleiche Gitterabstände bzw. gleiche Webdichte aufweist, womit entsprechend der Abstimmung auf die Größe der Partikel des eingelagerten elektroaktiven Materials manchmal nur einzelne bzw. sehr wenige Partikel in einer einzelnen Gittertasche Platz finden, wogegen in anderen Bereichen der Speicherschicht auch mehrere bis viele Partikel des elektroaktiven Materials zusammen in einer Gittertasche sein können.

In weiterer Ausgestaltung der Erfindung ist vorgesehen, daß die Gittertaschen der Speicherschicht im wesentlichen quaderförmig sind. Dies vereinfacht das Weben der Speicherschicht, wobei die tatsächliche Größe der jeweiligen Gittertaschen auf oben beschriebene Weise auf die Größe und elektrischen Leitfähigkeit der Partikel des eingelagerten oder einzulagernden elektroaktiven Materials und die jeweils vorliegende Stromdichte abgestimmt ist.

Die Speicherschicht kann in weiters bevorzugter Ausgestaltung der Erfindung mehrlagig, mit Lagen von in sich gleichmäßiger, von der Leitschicht weg aber jeweils abnehmender Webdichte aufgebaut sein. Auch dies ergibt eine Vereinfachung beim Weben der Speicherschicht, wobei der schichtartige Aufbau die beschriebenen Vorteile der erfindungsgemäßen Ausführung ermöglicht.

Nach einer besonders bevorzugten weiteren Ausgestaltung der Erfindung ist vorgesehen, daß zumindest eine Lage der Speicherschicht ein eingewebtes Muster mit zum Außenanschluß der Leitschicht hin zumindest bereichsweise zunehmender Webdichte aufweist. Damit kann in jeder einzelnen Schicht der mehrlagigen Speicherschicht der Umsetzung der erfindungsgemäßen Idee entsprochen werden, wonach der erforderliche Gitterkontakt der elektroaktiven Partikel in der Speicherschicht lokal unterschiedlich und abhängig von der Entfernung zur tatsächlichen Ableitung der Elektronen ist.

Leitschicht und Speicherschicht sind in besonders bevorzugter weiterer Ausgestaltung der Erfindung gemeinsam in einem dreidimensional mit schichtweise und/oder lokal unterschiedlicher Webdichte verwobenen, zumindest teilweise aus elektrisch leitend beschichteten Fasern bestehenden Polymerstoff ausgebildet. Dies ermöglicht eine besonders einfache Herstellung der erfindungsgemäßen Elektrode durch die verwobene Ausbildung von Leitschicht und Speicherschicht, die eine nachträgliche leitende Verbindung dieser Schichten (wie sie beispielsweise in der eingangs genannten DE 40 19 192 A beschrieben ist) überflüssig macht. Die Leitschicht wird dabei naturgemäß von vornherein mit wesentlich höherer Dichte als die einzelnen Bereiche der Speicherschicht gewebt, da in dieser ja keinerlei elektroaktives Material aufgenommen und gehalten werden muß. Auch bezüglich der Leitschicht könnte aber natürlich eine lokale Anpassung der jeweiligen Webdichte dahingehend erfolgen, daß zum externen Ableitanschluß hin eine höhere Webdichte gewählt wird, um die dorthin ansteigenden Stromdichten besser zu bewältigen, während entlegenere Bereiche wiederum mit geringerer Webdichte ausgeführt sein könnten, was das Gewicht der Gesamtanordnung günstig beeinflußt.

In weiterer Ausgestaltung der Erfindung kann vorgesehen sein, daß die mit der größten lokalen Webdichte verwobenen Leitschicht maximal bis zu 50 % der Gesamtdicke der flächigen Elektrode einnimmt, was einen guten Kompromiß zwischen Ableitfähigkeit einerseits und elektroaktivem Volumen andererseits darstellt.

Mit der Leitschicht verwobene Speicherschichten können nach einer weiteren Ausgestaltung der Erfindung nicht nur auf einer Seite der Leitschicht sondern auch auf beiden Oberflächenseiten der Leitschicht angeordnet sein, was ebenfalls eine günstige Beeinflussung der Gesamtcharakteristik der Elektrode bzw. der elektrochemischen Anordnung mit einer derartigen Elektrode erlaubt.

Die Gitterfäden von Speicherschicht und gegebenenfalls Leitschicht haben in bevorzugter weiterer Ausbildung der Erfindung eine Dicke im Bereich von 0,08 bis 1,0 mm, was das Abdecken vielfältigster Anordnungen mit derartigen Elektrodenausgestaltungen ermöglicht.

Die Gitterfäden von Speicherschicht und gegebenenfalls Leitschicht sind in weiterer vorteilhafter Ausgestaltung der Erfindung mit einem kontinuierlichen Überzug von 0,01 bis 10 µm Dicke eines Metalls der Gruppe Cu, Fe, Ti, Ni, Cr, Al, Ag, Au, Mn, rostfreiem Stahl, oder deren Legierungen, oder mit anderen leitfähigen Substanzen, wie etwa elektrisch leitenden Oxiden, Leitruß oder dergleichen, beschichtet, wobei zusätzlich vorgesehen sein kann, daß dieser kontinuierliche Überzug mit einem zweiten entsprechenden Überzug aus der Gruppe folgender Metalle oder deren Legierungen, (Cu, Fe, Ti, Ni, Cr, Al, Ag, Au, Mn und rostfreier Stahl) oder mit leitenden Oxiden oder Leitruß beschichtet ist, wobei die Gesamtdicke der beiden Schichten 15 µm nicht überschreitet. Mit diesen Ausgestaltungen können verschiedenste Anwendungsgebiete bzw. verwendete Materialien abgedeckt werden.

Die Webfäden des dreidimensionalen Gitters bestehen in weiterer Ausgestaltung der Erfindung bevorzugt aus Fasern eines Polymers folgender Gruppe: Polyester, Silicongummi, Polyethylen, Ethylen-Tetrafluorethylen Copolymer, Polytetrafluorethylen und Polyvinylidenfluorid.

Nach einer besonders bevorzugten weiteren Ausgestaltung der Erfindung können in Speicherschicht und/oder Leitschicht zusätzliche eigenständige metallische Fäden, vorzugsweise aus einem Metall der Gruppe: Cu, Fe, Ti, Ni, Cr, Al, Ag, Au, Mn, rostfreier Stahl, oder deren Legierungen, in regelmäßigen Intervallen mit eingewoben sein, vorzugsweise mit einem Durchmesser, der in der Größenordnung dem Durchmesser der leitend beschichteten Kunststoffasern entspricht, wobei die Masse der Metallfäden nicht mehr als etwa 30 % der Masse der Elektrode ausmacht. Auf diese Weise kann die Leitfähigkeit im dreidimensionalen Gitter der Elektrode bedarfsweise auch lokal weiter beeinflusst und an die jeweiligen Erfordernisse angepasst werden, wobei üblicherweise mit einem relativ geringem Prozentsatz derartiger durchgehend leitfähiger Fäden das Auslangen zu finden sein wird, um das Gesamtgewicht der Elektrode nicht unnötig zu erhöhen.

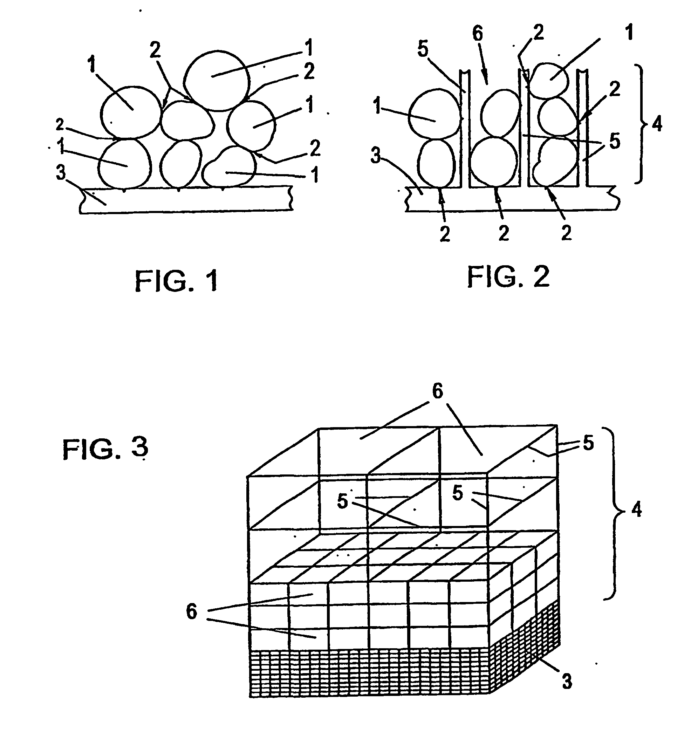

Die Erfindung wird im folgenden noch anhand der in den beigeschlossenen schematischen Zeichnungen verdeutlichten Ausführungsbeispiele näher erläutert. Fig. 1 zeigt dabei die Anordnung elektroaktiver Partikel, beispielsweise in einer Batterie, an einem einzelnen Stromableiter, gemäß dem bekannten Stand der Technik, Fig. 2 zeigt eine ähnliche Anordnung wie Fig. 1 in einer grundsätzlichen Ausgestaltung nach der vorliegenden Erfindung und die Fig. 3 bis 5 zeigen jeweils unterschiedlich ausgebildete Gitterstrukturen von Leitschicht und Speicherschicht von Elektroden gemäß der vorliegenden Erfindung.

Bei der Anordnung nach dem Stande der Technik gemäß Fig. 1 Ist eine Vielzahl einzelner Partikel 1 von elektroaktivem Material so in einer insgesamt nicht weiter dargestellten, im wesentlichen flächigen Elektrode einer elektrochemischen Anordnung, wie etwa einer Batterie, plaziert, dass die einzelnen Partikel 1 zwar untereinander Kontaktstellen 2 haben, dass aber nur wenige, einer Leitschicht 3 (bzw. einem leitenden Gitterfaden) unmittelbar benachbarte Partikel 1 direkten Kontakt mit der Leitschicht 3 haben. Da die verwendeten elektroaktiven Materialien in elektrochemischen Anordnungen der hier interessierenden Art sehr oft nur relativ geringe Eigenleitfähigkeit aufweisen, bedeutet dies, dass der Stromfluss von bzw. zu den weiter von der Leitschicht 3 entfernten Partikeln 1 stark behindert ist, was sich letztlich negativ auf die Gesamtenergiedichte der Anordnung auswirkt. Darüber hinaus bedeutet eine große Anzahl von mechanisch ungestützt im gleichen Bereich befindlichen elektroaktiven Partikeln 1 auch eine relativ große Gefahr von mechanischer Instabilität der Anordnung, was zu Beschädigungen des strukturellen Zusammenhaltes und damit verbundener weiterer Absenkung der Energiedichte führen kann. Durch die Notwendigkeit, zur Erhöhung der Leitfähigkeit in derartigen Anordnungen Zusatzstoffe zwischen die Partikel 1 einzubringen, verschlechtert sich darüber hinaus auch die gravimetrische Energiedichte der Anordnung.

Bei Elektroden gemäß der vorliegenden Erfindung wird - wie in Fig. 2 schematisch dargestellt - die lokale Geometrie der Gitterstruktur der Speicherschicht 4 so auf die Größe und elektrische Leitfähigkeit der Partikel 1 des eingelagerten elektroaktiven Materials und die im Betrieb der Anordnung jeweils vorliegende Stromdichte abgestimmt, daß bei schlechter Leitfähigkeit der Partikel 1 und/oder hoher lokaler Stromdichte im wesentlichen jedes einzelne der Partikel 1 an den Stellen 2 direkten Kontakt zu den Gitterfäden 5 bzw. damit auch zur Leitschicht 3 hat, wogegen bei guter Leitfähigkeit der Partikel 1 und/oder niederer lokaler Stromdichte auf in Fig. 2 nicht dargestellte Weise auch Partikel 1 ohne eigenen direkten Kontakt mit den Gitterfäden 5 in einer Gittertasche 6 Platz finden können. Auf diese Weise ist eine schlechte Leitfähigkeit der Partikel 1 selbst unbedeutend und eine gute mechanische Stabilität der Speicherschicht 4 bzw. der gesamten Elektrode sichergestellt Es braucht weiters auch kein Leitfähigkeitszusatz oder dergleichen verwendet werden, was die gravimetrische Energiedichte zusätzlich verbessert.

Mit Anordnungen gemäß Fig. 2 sind wesentlich kürzere elektronische Durchgänge bis zum Stromableiter über nur wenige bis gar keine Punktkontakte zwischen den einzelnen Partikeln 1 sichergestellt, womit der elektrische Ableitwiderstand zwischen dem elektroaktivem Material und dem Stromableiter insgesamt verringert wird. Ein niedriger Widerstand zwischen dem elektroaktivem Material und dem Stromableiter bedeutet, daß weniger Leistung als Abwärme verloren geht, wobei der Leistungsverlust direkt proportional zu diesem Widerstand ist. Es wird also die maximale Leistung sowie die Lade- und Entladeeffizienz eines Energiespeichers, in dem erfindungsgemäße Elektroden eingebaut sind, erhöht. Gleichermaßen wird der Widerstandsverlustfaktor verringert, wenn derartige Elektroden in einem Superkondensator verwendet werden. Weiters wird die Menge an notwendigen leitfähigen Zusätzen und Bindern wesentlich erniedrigt, bzw. können derartige Zusätze überhaupt entfallen, wenn Anordnungen gemäß der vorliegenden Erfindung verwendet werden.

Fig. 3 bis 5 zeigen jeweils nur die Gitterstruktur von Leitschicht und Speicherschicht kleiner Bereiche von erfindungsgemäßen Elektroden für elektrochemische Anordnungen - die Partikel des elektroaktiven Materials sowie allfällige weitere Zusatzstoffe sind des besseren Überblickes wegen ebenso wie externe elektrische Anschlüsse an der Leitschicht äußere Abdeckschichten und dergleichen weggelassen. In allen Fällen ist die Leitschicht 3 gemeinsam mit der Speicherschicht 4 in einem dreidimensionalen, schichtweise und/oder lokal mit unterschiedlicher Webdichte verwobenen (bzw. Wirkdichte gewirkten), zumindest teilweise aus elektrisch leitend beschichteten Fasern bestehenden Polymerstoff ausgebildet Ob die Beschichtung der Fasern nach dem Weben des Stoffes oder aber vorher erfolgt ist dabei belanglos bzw. eine Frage der jeweils zu bevorzugenden Webtechnik.

Gemäß Fig. 3 haben die näher zur Leitschicht 3 liegenden unteren Speicherschichten 4 kleinere Gittertaschen 6 bzw. geringere Gitterdimenslonen, wogegen die weiter entfernt von der Leitschicht 3 liegenden Speicherschichten 4 wiederum größere Gittertaschen 6 aufweisen. Bei vorausgesetzter durchgehend etwa gleicher Größe der elektroaktiven Partikel in der gesamten Speicherschicht 4 ergibt sich damit im unteren Bereich (ähnlich wie in Fig. 2 dargestellt) im wesentlichen ein direkter Kontakt jedes einzelnen Partikels mit zumindest einem der Gitterfäden 5, wogegen im oberen, weiter gewebten Bereich auch einzelne Partikel des elektroaktiven Materials in den Gittertaschen 6 Platz finden können, die keinen direkten eigenen Kontakt mit den leitenden Gitterfäden 5 haben. Da die Stromdichte in der Nähe der Leitschichte 3 naturgemäß wesentlich größer ist, als im weiter entfernten Außenbereich, ist dies kein Problem. Es kann auf diese Weise also eine vergleichmäßigung der Stromleitung erreicht werden, wobei die notwendige Stabilität durch die innen dichter gewebten Schichten sichergestellt bleibt, wogegen in den größeren äußeren Gittertaschen 6 mehr elektroaktives Material Platz findet, was insgesamt sowohl die volumetrische als auch die gravimetrische Energiedichte der Anordnung gegenüber den bekannten Anordnungen wesentlich verbessert.

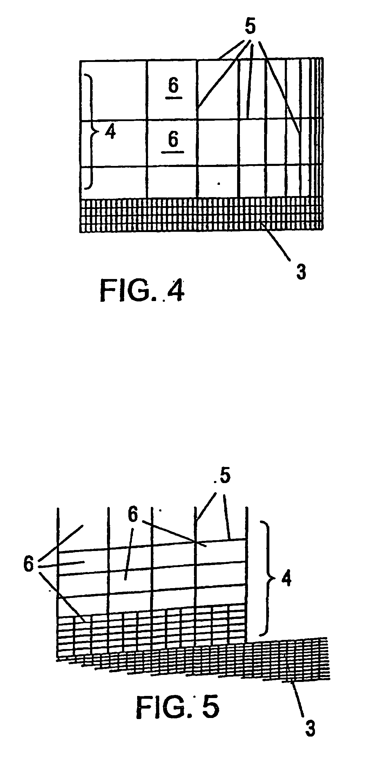

In Fig. 4 ist eine Anordnung schematisch dargestellt, bei der die Speicherschichten 4 sowohl in der vertikalen als auch in der horizontalen Richtung unterschiedliche Dimensionen aufweisen, was es beispielsweise auf einfache Art ermöglicht, die Stromableitung zur in der Darstellung rechten unteren Ecke der Anordnung hin durch auf diesen Bereich hin dichter gewebte Gitterfäden 5 zu verbessern bei gleichzeitiger Reduzierung des von den nicht elektroaktiven Materialien beanspruchten Volumens. Von links oben nach rechts unten nimmt für jede einzelne Gittertasche 6 die Wahrscheinlichkeit zu, dass jedes einzelne der in der jeweiligen Gittertasche befindlichen elektroaktiven Partikel direkten Kontakt mit einem stromableitenden Gitterfaden 5 hat.

Bei der Anordnung nach Fig. 5 ist der Bereich der Speicherschichten 4 ähnlich ausgebildet wie zu Fig. 3 - die Leitschicht 3 ist hier nun so gewebt, dass ihre Dicke zur elektrischen Ableitung nach außen hin (rechts unten) stetig zunimmt, wie dies auch der Stromfluss tut.

Nachdem die Masse des sowohl in der Leitschicht als auch der Speicherschicht zur Stromableitung erforderlichen Materials einen beträchtlichen Teil der gesamten Masse beispielsweise einer Batterie darstellt, wird durch die beschriebenen erfindungsgemäßen Ausgestaltungen die gravimetrische Energiedichte einer mit derartigen Elektroden ausgerüsteten elektrochemischen Anordnung deutlich positiv beeinflusst, wobei die dargestellten und beschriebenen Gitterstrukturen trotz ausreichender mechanischer Festigkeit für das Festhalten des elektroaktiven Materials flexibel genug sind, um beispielsweise ein Wickeln oder Zusammenfalten der Elektroden ohne Beschädigung zu erlauben. Die dreidimensional verwobenen Polymerstoffe, die die grundsätzliche Gitterstruktur der flächigen Elektroden bilden, können einfach und kostengünstig in großen Mengen unter Verwendung bekannter Web- bzw. Wirktechniken hergestellt werden. Sofeme die einzelnen Schichten zum Bereich der externen elektrischen Anschlüsse hin - wie beschrieben - unterschiedliche bzw. sich verändernde Webdichten aufweisen sollen, kann dies sehr einfach nach Art von eingewebten Mustern realisiert werden, wobei dann nach dem Weben ganzer Bahnen derartigen Stoffes die entsprechenden Bereiche ausgeschnitten oder ausgestanzt werden können.

Die verwendeten Fasern können aus einem oder mehreren Fäden pro Faser aufgebaut sein, wobei der Faserwerkstoff so zu wählen ist, daß er in dem elektrochemischen System, in dem er verwendet wird, möglichst unreaktiv ist und keine chemischen Reaktionen oder Volumenänderung eingeht. Diesbezüglich bevorzugte Werkstoffe und Werkstoffkombinationen sind in den Ansprüche beschrieben. Die leitenden Beschichtungen der Kunststoffasern des Gitters können wie beschrieben auch aus zwei Schichten bestehen, wobei vorzugsweise direkt an der Kunststoffaser eine Schicht hoher elektrischer Leitfähigkeit und darauf eine Schicht mit erhöhter Korrosionsstabilität im vorliegenden System aufgebracht wird. Auch die Dicke der für die Leitung auf die Kunststoffasern aufgebrachten Schichten ist natürlich so zu wählen, daß die Leitfähigkeit für das jeweils vorliegende elektrochemische System mit bestimmter Geometrie, Größe und erforderlichen Eigenschaften entsprechend ist. Das Aufbringen dieser leitfähigen Schichten auf den Kunststoffasern kann durch verschiedene bekannte Methoden erfolgen, beispielsweise durch außenstromlose Metallabscheidung oder außenstromlose Metallabscheidung in Verbindung mit galvanischer Verstärkung der Schichten oder durch Destabilisation einer Dispersion aus elektrisch leitenden Partikeln. Bevorzugt werden die Kunststoffasern des Gitters erst nach dem Verweben metallisiert. Das Verweben von bereits vorher leitfähig gemachten Fasern wird üblicherweise in den Fällen bevorzugt, in denen die Beschichtung der bereits fertig gewobenen Struktur schwierig, zeitaufwendig oder kostspielig ist, z.B. wenn die Leitschicht eine sehr hohe Webdichte und Dicke aufweist.

Um die Leitfähigkeit insbesonders der Leitschicht bedarfsweise zu erhöhen, können auf in den Figuren nicht separat ersichtliche Weise auch zusätzlich eigenständige Metallfäden in die Gitterstruktur miteingewoben werden, wobei diese Fäden durchgehend aus dem gleichen Material wie z.B. die Metallüberzüge der benachbarten Kunststoffasern sein können und auch zumindest größenordnungsmäßig gleiche Dicke aufweisen.

## Patentansprüche

1. Mehrschichtige, im wesentlichen flächige Elektrode einer elektrochemischen Anordnung, insbesonders einer Batterie oder eines Kondensators, bestehend zumindest aus einer elektrisch gut leitenden, Leitschicht (3) und einer damit elektrisch leitend verbundenen, eine Gitterstruktur aufweisenden Speicherschicht (4) aus gewebten bzw. gewirkten, elektrisch leitfähig gemachten Fäden (5), in welcher elektroaktives Material samt allfälliger Zusatzstoffe eingelagert ist, **dadurch gekennzeichnet, dass** die lokale Geometrie der Gitterstruktur der Speicherschicht (4) auf die Größe und elektrische Leitfähigkeit der Partikel (1) des eingelagerten elektroaktiven Materials und die im Betrieb der Anordnung jeweils vorliegende Stromdichte so abgestimmt ist, dass bei schlechter Leitfähigkeit der Partikel (1) und/oder hoher lokaler Stromdichte im wesentlichen jedes einzelne der Partikel (1) direkten Kontakt zu den Gitterfäden (5) hat, wogegen bei guter Leitfähigkeit der Partikel und/oder niederer lokaler Stromdichte auch Partikel (1) ohne eigenen direkten Kontakt mit den Gitterfäden (5) in einer Gittertasche (6) Platz finden, wozu die Gittertaschen (6) mit zunehmender Entfernung von der Leitschicht (3) und/oder einem Außenanschluss der Leitschicht (3) größeres Volumen aufweisen.

2. Elektrode nach Anspruch 1, **dadurch gekennzeichnet, dass** die Gittertaschen (6) der Speicherschicht (4) im wesentlichen quaderförmig sind.

3. Elektrode nach Anspruch 2, **dadurch gekennzeichnet, dass** die Speicherschicht (4) mehrlagig, mit Lagen von in sich gleichmäßiger, von der Leitschicht (3) weg aber jeweils abnehmender Webdichte, aufgebaut ist.

4. Elektrode nach Anspruch 2 oder 3, **dadurch gekennzeichnet, dass** zumindest eine Lage der Speicherschicht (4) ein eingewebtes Muster mit zum Außenanschluss der Leitschicht (3) hin zumindest bereichsweise zunehmender Webdichte aufweist.

5. Elektrode nach einem oder mehreren der Ansprüche 1 bis 4, **dadurch gekennzeichnet, dass** Leitschicht (3) und Speicherschicht (4) gemeinsam in einem dreidimensional mit schichtweise und/oder lokal unterschiedlicher Webdichte verwobenen, zumindest teilweise aus elektrisch leitend beschichteten Fasern (5) bestehenden Polymerstoff ausgebildet sind.

6. Elektrode nach Anspruch 5, **dadurch gekennzeichnet, daß** die mit der größten lokalen Webdichte verwobene Leitschicht (3) maximal bis zu 50 % der Gesamtdicke der flächigen Elektrode einnimmt.

7. Elektrode nach Anspruch 5 oder 6, **dadurch gekennzeichnet, daß** auf beiden Oberflächenseiten der Leitschicht (3) mitverwobene Speicherschichten (4) angeordnet sind.

8. Elektrode nach einem oder mehreren der Ansprüche 1 bis 7, **dadurch gekennzeichnet, daß** die Gitterfäden (5) von Speicherschicht (4) und gegebenenfalls Leitschicht (3) eine Dicke im Bereich von 0,08 - 1,0 mm haben.

9. Elektrode nach einem oder mehreren der Ansprüche 1 bis 8, **dadurch gekennzeichnet, daß** die Gitterfäden (5) von Speicherschicht (4) und gegebenenfalls Leitschicht (3) mit einem kontinuierlichen Überzug von 0,01 bis 10 µm Dicke eines Metalls der Gruppe Cu, Fe, Ti, Ni, Cr, Al, Ag, Au, Mn, rostfreiem Stahl oder deren Legierungen oder mit anderen leitfähigen Substanzen, wie etwa elektrisch leitenden Oxiden, Leitruß oder dergleichen, beschichtet sind.

10. Elektrode nach Anspruch 9, **dadurch gekennzeichnet, daß** der kontinuierliche leitende Überzug mit einem zweiten kontinuierlichen Überzug aus der Gruppe folgender Metalle oder deren Legierungen: Cu, Fe, Ti, Ni, Cr, Al, Ag, Au, Mn und rostfreiem Stahl, oder mit leitenden Oxiden oder Leitruß beschichtet ist, wobei die Gesamtdicke beider Schichten 15 µm nicht überschreitet

11. Elektrode nach einem oder mehreren der Ansprüche 1 bis 10, **dadurch gekennzeichnet, daß** die Kunststoff-Webfäden (5) aus Fasern eines Polymers folgender Gruppe bestehen: Polyester, Silicongummis, Polyethylen, Polypropylen, Ethylen-Tetrafluorethlyen Copolymer, Polytetrafluorethylen und Polyvinylidenfuoride.

12. Elektrode nach einem oder mehreren der Ansprüche 1 bis 11, **dadurch gekennzeichnet, daß** in Speicherschicht (4) und/oder Leichtschicht (3) metallische Fäden, vorzugsweise aus einem Metall der Gruppe: Cu, Fe, Ti, Ni, Cr, Al, Ag, Au, Mn, rostfreiem Stahl oder deren Legierungen, in regelmäßigen Intervallen miteingewoben sind, vorzugsweise mit einem Durchmesser, der in der Größenordnung dem Durchmesser der leitend beschichteten Fasern entspricht.

## Claims

1. Multi-layered, essentially flat electrode of an electro-chemical arrangement, in particular, a battery or a capacitor, comprising at least one good electrically-conductive conductive layer (3) with a storage layer (4) connected to the latter in an electrically-conductive manner and providing a mesh structure made from woven and/or knitted, threads (5), which have been made electrically-conductive, into which mesh structure electroactive material, together with any additives, is deposited, **characterised in that** the local geometry of the mesh structure of the storage layer (4) is adapted to the size and electrical conductivity of the particles (1) of the deposited electroactive material and to the current density present during the respective operation of the arrangement, in such a manner that, in the presence of a poor conductivity of the particles (1) and/or a high local current density, essentially each one of the particles (1) is in direct contact with the mesh threads (5); whereas in the presence of a good conductivity of the particles and/or a low local current density, particles (1), which are not in direct contact with the mesh threads (5), are also accommodated in a mesh recess (6), for which reason, the mesh recesses (6) provide a larger volume with increasing distance from the conductive layer (3) and/or an external connection of the conductive layer (3).

2. Electrode according to claim 1, **characterised in that** the mesh recesses (6) of the storage layer (4) are essentially cuboidal in shape.

3. Electrode according to claim 2, **characterised in that** the storage layer (4) is built up in a multi-layered manner with layers of per se uniform woven density, but wherein the woven density decreases in each case as the distance from the conductive layer (3) increases.

4. Electrode according to claim 2 or 3, **characterised in that** at least one layer of the storage layer (4) provides a woven pattern with a woven density, which increases, at least in regions, as the distance from the external connection of the conductive layer (3) decreases.

5. Electrode according to one or more of claims 1 to 4, **characterised in that** the conductive layer (3) and storage layer (4) are designed together to form a three-dimensional polymer fabric woven in layers and/or with locally different woven density, consisting, at least in part, of fibres (5) with an electrically-conductive coating.

6. Electrode according to claim 5, **characterised in that** the conductive layer (3) woven with the greatest local woven density occupies a maximum of up to 50% of the total thickness of the flat electrode.

7. Electrode according to claim 5 or 6, **characterised in that** interwoven storage layers (4) are arranged on both surfaces of the conductive layer (3).

8. Electrode according to one or more of claims 1 to 7, **characterised in that** the mesh threads (5) of the storage layer (4) and optionally of the conductive layer (3) have a thickness within the range from 0.08 - 1.0 mm.

9. Electrode according to one or more of claims 1 to 8, **characterised in that** the mesh threads (5) of the storage layer (4) and optionally of the conductive layer (3) are coated with a continuous coating of 0.01 to 10 µm thickness of a metal from the group: Cu, Fe, Ti, Ni, Cr, Al, Ag, Au, Mn, stainless steel or their alloys or with other conductive substances such as, for example, electrically-conductive oxides, conductive soot or similar.

10. Electrode according to claim 9, **characterised in that** the continuous conductive coating is coated with a second continuous coating from the group of the following metals or their alloys: Cu, Fe, Ti, Ni, Cr, Al, Ag, Au, Mn and stainless steel, or with conductive oxides or conductive soot, wherein the total thickness of both layers does not exceed 15 µm.

11. Electrode according to one or more of claims 1 to 10, **characterised in that** the synthetic-material woven threads (5) consist of fibres of a polymer from the following group: polyester, silicone rubber, polyethylene, polypropylene, ethylene tetrafluoroethylene copolymer, polytetrafluoroethylene and polyvinylidene fluorides.

12. Electrode according to one or more of claims 1 to 11, **characterised in that** metallic threads, preferably made from a metal from the group: Cu, Fe, Ti, Ni, Cr, Al, Ag, Au, Mn, stainless steel or their alloys and preferably with a diameter, which corresponds in order of magnitude to the diameter of the fibres with the conductive coating, are interwoven at regular intervals in the storage layer (4) and/or the conductive layer (3).

## Revendications

1. Electrode multicouche sensiblement plane d'un dispositif électrochimique, en particulier une batterie ou un condensateur, constituée d'au moins d'une couche conductrice (3), conduisant bien l'électricité, et d'une couche de stockage (4) électroconductrice et reliée à celle-ci, présentant une structure réticulaire, composée de fils (5) tissés et/ou maillés, rendus électroconducteurs, dans laquelle un matériau électroactif, avec tous les additifs éventuels, est stocké, **caractérisée en ce que** la géométrie locale de la structure réticulaire de la couche de stockage (4) est adaptée à la taille et à la conductivité électrique des particules (1) du matériau électroactif stocké et à chaque densité de courant présente, lorsque le dispositif est en fonctionnement, et **en ce que**, en cas de mauvaise conductivité des particules (1) et/ou de forte densité de courant locale, chacune des particules (1) a sensiblement un contact direct avec les fils réticulés (5), tandis qu'en cas de bonne conductivité des particules et/ou de densité de courant locale plus basse, les particules (1) sans contact direct propre avec les fils réticulés (5) sont placées dans un sachet réticulé (6), de telle sorte que les sachets réticulés (6) présentent un volume accru au fur et à mesure qu'ils s'éloignent de la couche conductrice (3) et/ou d'une jonction externe de la couche conductrice (3).

2. Electrode selon la revendication 1, **caractérisée en ce que** les sachets réticulés (6) de la couche de stockage (4) sont sensiblement en forme de parallélépipède.

3. Electrode selon la revendication 2, **caractérisée en ce que** la couche de stockage (4) est conçue selon une forme multicouche, avec des couches ayant en soi la même épaisseur de tissage mais ayant une épaisseur de tissage diminuant au fur et mesure qu'elles s'éloignent de la couche conductrice (3).

4. Electrode selon la revendication 2 ou 3, **caractérisée en ce qu'**au moins une couche de la couche de stockage (4) présente un modèle tissé avec au niveau de la jonction externe de la couche conductrice (3) une épaisseur de tissage augmentant au moins par zones.

5. Electrode selon une ou plusieurs des revendications 1 à 4, **caractérisée en ce que** la couche conductrice (3) et la couche de stockage (4), tissées ensemble selon une épaisseur de tissage tridimensionnelle par couches et/ou différente au niveau local, sont formées au moins partiellement de fibres revêtues (5) électro-conductrices se composant de matériau polymère.

6. Electrode selon la revendication 5, **caractérisée en ce que** la couche conductrice (3) tissée avec la plus grande épaisseur locale de tissage reçoit au maximum jusqu'à 50% de l'épaisseur totale de l'électrode plane.

7. Electrode selon la revendication 5 ou 6, **caractérisée en ce que** des couches de stockage (4) tissées entre elles sont disposées sur les deux faces extérieures de la couche conductrice (3).

8. Electrode selon une ou plusieurs des revendications 1 à 7, **caractérisée en ce que** les fils réticulés (5) de la couche de stockage (4) et le cas échéant de la couche conductrice (3) présentent une épaisseur dans la fourchette de 0,08 à 1,0 mm.

9. Electrode selon une ou plusieurs des revendicatives 1 à 8, **caractérisée en ce que** les fils réticulés (5) de la couche de stockage (4) et le cas échéant de la couche conductrice (3) sont revêtus d'un revêtement continu de 0,01 à 10 µm d'épaisseur d'un métal du groupe Cu, Fe, Ti , Ni, Cr, Al, Ag, Au, Mn, d'acier inoxydable ou de leurs alliages ou d'autres substances conductrices, comme des oxydes sensiblement électroconducteurs, de la suie conductrice, ou similaire.

10. Electrode selon la revendication 9, **caractérisée en ce que** le revêtement conducteur continu est revêtu d'un deuxième revêtement continu appartenant au groupe des métaux suivants ou de leurs alliages : Cu, Fe, Ti, Ni, Cr, Al, Ag, Au, Mn et acier inoxydable, ou avec des oxydes conducteurs ou de la suie conductrice, l'épaisseur totale des deux couches ne dépassant pas 15 µm.

11. Electrode selon une ou plusieurs des revendications 1 à 10, **caractérisée en ce que** les fils de tissage (5) en matière synthétique sont constitués de fibres d'un polymère du groupe suivant : polyester, caoutchouc de silicone, polyéthylène, polypropylène, copolymère éthylène-tétrafluoréthylène, polytétrafluoréthylène et fluorure de polyvinylidène.

12. Electrode selon une ou plusieurs des revendications 1 à 11, **caractérisée en ce que** des fils métalliques, constitués de préférence d'un métal du groupe : Cu, Fe, Ti, Ni, Cr, Al, Ag, Au, Mn, acier inoxydable ou de leurs alliages sont tissés, à des intervalles réguliers, dans la couche de stockage (4) et/ou dans la couche conductrice (3), de préférence avec un diamètre correspondant à l'ordre de grandeur du diamètre des fibres revêtues d'une substance conductrice.
